# FASCICULE DE BREVET EUROPEEN

(11) **EP 3 253 609 B1**
(45) Date de publication et mention de la délivrance du brevet: **07.10.2020**
(21) Numéro de dépôt: 16703589.8
(22) Date de dépôt: 20.01.2016
(51) Int. Cl.: B60K 17/34, B60K 17/356, F16H 47/02

(54) **SYSTÈME DE TRANSMISSION AVEC MODULE HYDRAULIQUE**
ÜBERTRAGUNGSSYSTEM MIT HYDRAULIKMODUL
TRANSMISSION SYSTEM WITH HYDRAULIC MODULE

(30) Priorité: 06.02.2015 FR 1550949
(43) Date de publication de la demande: 13.12.2017
(73) Titulaire: Renault S.A.S., 92100 Boulogne-Billancourt (FR)
(72) Inventeur: DUFFOUR, Nicolas, 78390 Bois d'Arcy (FR)
(86) Numéro de dépôt international: PCT/FR2016/050110
(87) Numéro de publication internationale: WO 2016/124833

(56) Documents cités:
- EP-A1- 2 562 442
- FR-A1- 2 621 280
- FR-A1- 2 996 176
- FR-A1- 2 996 277
- US-A1- 2002 139 597
- US-B1- 7 597 172

## Description

L'invention concerne les systèmes de transmission de couple pour les véhicules automobiles. En particulier, elle concerne les systèmes de transmission de couple pour les véhicules automobiles pouvant sélectivement passer de un à plusieurs essieux motorisés.

Dans des situations de conduite particulière, notamment sur sol meuble, il est parfois nécessaire de posséder plusieurs essieux motorisés pour maintenir le véhicule automobile en mouvement. Il est donc utile de pouvoir choisir le nombre d'essieux motorisés selon la situation de conduite.

De manière standard, un véhicule possède un seul essieu motorisé, généralement l'essieu situé à proximité du groupe motopropulseur. Cet essieu peut donc être alternativement à l'avant ou à l'arrière du véhicule. On appellera cet essieu, l'essieu principal.

Un essieu est, historiquement, un arbre s'étendant transversalement entre des roues placées de part et d'autre d'un véhicule. Cependant, en raison des développements de l'industrie automobile, on entend par essieu l'ensemble des pièces reliant transversalement les roues situées de part et d'autre du véhicule.

De manière standard, les roues portées par l'essieu principal sont entrainées par le groupe motopropulseur par l'intermédiaire d'un dispositif de couplage comprenant un embrayage, une boite de vitesses et un différentiel. Le différentiel est alors placé entre deux demi-arbres formant l'essieu de manière à permettre une vitesse de rotation différente entre les deux demi-arbres. Le différentiel comprend habituellement un pignon conique entraîné par l'arbre moteur. Ce pignon s'engrène perpendiculairement avec une couronne, solidaire d'une cage portant des pignons coniques appelés satellites. Les satellites sont liés cinématiquement avec deux demi-arbres formant un essieu. Ces demi-arbres sont appelés planétaires. Chaque demi-arbre porte au moins une roue du véhicule.

Lorsque la couronne est entrainée en rotation, la cage tourne et entraine, par l'intermédiaire des satellites, les deux demi-arbres à la même vitesse. Dans cette situation, les pignons satellites ne tournent pas sur leur axe propre et sont simplement entrainés par la cage. Si des efforts résistants différents sont appliqués aux deux demi-arbres, alors les deux demi-arbres prennent des vitesses différentes. La différence de vitesse entre les deux demi-arbres est rendue possible par la mise en rotation des pignons satellites sur leur propre axe.

Selon le type de véhicule, le ou les essieux complémentaires à l'essieu principal sont également motorisés.

Afin de motoriser également cet essieu complémentaire, il est nécessaire d'extraire une partie du couple issu du groupe motopropulseur pour entrainer ledit essieu.

Pour ce faire, différents systèmes de transmission peuvent être utilisés.

On connait notamment des systèmes de transmission utilisant un arbre longitudinal liant cinématiquement les essieux entre eux. Ces solutions sont cependant couteuses car elles nécessitent des changements profonds dans l'architecture du véhicule automobile.

On connait également des transmissions basées sur l'hydraulique, dans lesquelles une partie du couple moteur est utilisée pour entrainer une pompe hydraulique. Le fluide sous pression est ensuite détendu dans une turbine entraînant un essieu complémentaire. Les solutions hydrauliques connues requièrent cependant certaines modifications architecturales, notamment au niveau du dispositif de couplage du premier essieu.

On connait par ailleurs le document FR2621280 décrivant un groupe motopropulseur entrainant un premier train de roues et une transmission hydrostatique, la transmission hydrostatique entrainant un deuxième train de roues.

Le but de l'invention est de proposer un système de transmission du couple capable d'entrainer une pompe hydraulique en effectuant un minimum de modifications dans l'architecture du dispositif de couplage.

L'invention a donc pour objet un système de transmission de couple d'un groupe motopropulseur de véhicule automobile muni d'au moins deux essieux motorisés, comprenant un dispositif de couplage entre un arbre moteur entrainé par le groupe motopropulseur et un essieu motorisé comprenant deux demi-arbres portant des roues, le système de transmission de couple comprenant un dispositif de couplage entre un arbre moteur entrainé par le groupe motopropulseur et un essieu motorisé comprenant deux demi-arbres portant des roues. le système de transmission de couple comprenant par ailleurs un module hydraulique comprenant une pompe pour alimenter un circuit hydraulique sous pression permettant de motoriser un deuxième essieu et un arbre apte à entraîner ladite pompe. Le dispositif de couplage comprend par ailleurs au moins une boite de vitesses et un différentiel, le différentiel disposé dans un carter étant placé entre les deux demi-arbres de l'essieu, Le module hydraulique est fixé sur le dispositif de couplage, à l'extérieur dudit dispositif, l'arbre du module hydraulique étant entrainé par le dispositif de couplage. Ledit différentiel comprenant une cage munie d'une couronne, la boîte de vitesses disposée dans un autre carter (30) comprend au moins deux arbres, un arbre primaire entrainé par l'arbre moteur et un arbre secondaire lié cinématiquement à l'arbre primaire, l'arbre secondaire de la boite de vitesse portant un pignon de descente apte à engrener la couronne du différentiel. Le module hydraulique comprend en plus au moins un carter assemblé sur le carter comprenant le différentiel ou le carter comprenant la boite de vitesses.

Cet agencement du module hydraulique permet de prélever à l'essieu motorisé principal le couple nécessaire pour actionner un module hydraulique. Le couple est prélevé de manière simple sur le dispositif de couplage, sans modifier en profondeur l'architecture dudit dispositif. De plus, la fixation du module hydraulique à l'extérieur du carter du dispositif de couplage permet une facilité de montage. Cela permet en outre de changer ou réparer les éléments du module hydraulique sana devoir démonter le dispositif de couplage.

Dans un mode de réalisation, l'arbre du module hydraulique est pourvu de cannelures et la cage du différentiel est pourvue de cannelures aptes à recevoir les cannelures de l'arbre du module hydraulique.

Avantageusement, l'arbre du module hydraulique est creux et configuré pour le passage d'un des demi-arbres de l'essieu motorisé.

Le positionnement de l'arbre creux de la pompe autour du demi-arbre offre une solution de transmission compacte.

Dans un mode de réalisation, une couronne supplémentaire solidaire de la cage. En outre, l'arbre du module hydraulique porte un pignon, la couronne supplémentaire solidaire de la cage engrainant le pignon porté par l'arbre du module hydraulique.

Dans un mode de réalisation, l'un des deux arbres de ladite boite de vitesses porte une première poulie et l'arbre du module hydraulique porte une deuxième poulie, liée cinématiquement avec la première poulie moyen d'une courroie.

Dans un mode de réalisation, l'un des deux arbres de ladite boite de vitesses porte un premier pignon et l'arbre du module hydraulique porte un deuxième pignon, lié cinématiquement avec le premier pignon au moyen d'une chaine.

Dans un mode de réalisation, l'un des deux arbres de ladite boite de vitesses porte un premier pignon et l'arbre du module hydraulique porte un deuxième pignon, lié cinématiquement avec le premier pignon au moyen d'au moins un autre pignon intermédiaire.

Préférentiellement, le système de transmission comprend des garnitures étanches placées entre le carter du module hydraulique et le carter du dispositif de couplage.

Les garnitures étanches permettent d'éviter le mélange des fluides contenus dans les différents carters, améliorant ainsi la fiabilité du système.

Avantageusement, le module hydraulique comprend un dispositif d'embrayage placé entre l'arbre dudit module et la pompe dudit module apte à coupler ou désaccoupler l'arbre et la pompe.

Un tel embrayage permet de pouvoir choisir de prélever ou non du couple sur le dispositif de couplage. Cela permet par exemple de pouvoir activer ou non la pompe en vue d'un passage de un à deux essieux moteurs.

D'autres buts, avantages et caractéristiques de l'invention apparaîtront à l'examen de la description détaillée de trois modes de réalisation, nullement limitatifs, et des dessins annexés sur lesquels :
- la figure 1 représente un système de transmission du couple selon un premier mode de réalisation de l'invention,
- la figure 2 représente un détail du système de transmission selon le premier mode de réalisation présenté en figure 1,
- la figure 3 représente un système de transmission selon un deuxième mode de réalisation de l'invention et
- la figure 4 représente un système de transmission selon un troisième mode de réalisation de l'invention.

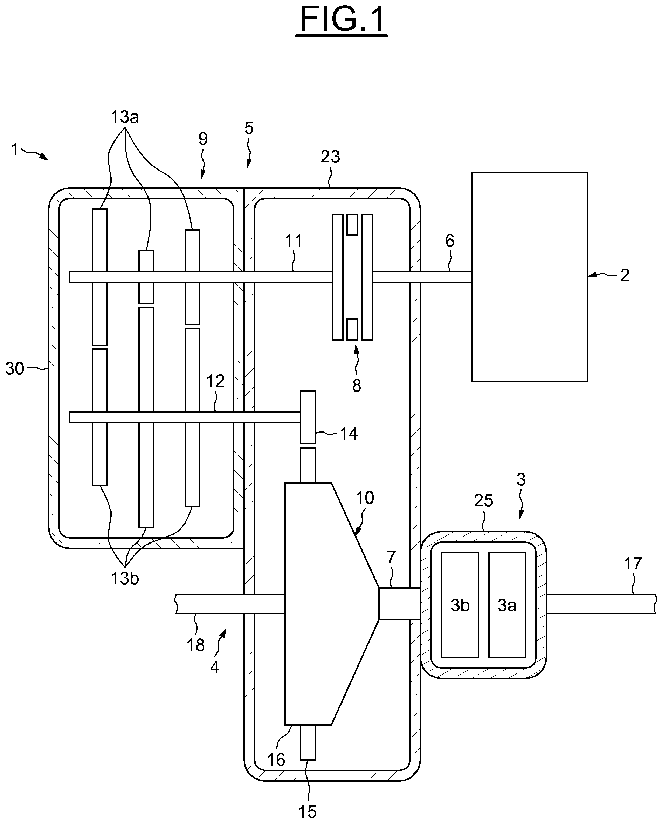

La figure 1 représente un système de transmission 1 apte à transmettre un couple moteur issu d'un groupe motopropulseur 2 à une pompe 3a d'un module hydraulique 3. Le système 1 est prévu pour équiper des véhicules automobiles munis d'au moins deux essieux motorisés. On a représenté, sur la figure 1, le système de transmission 1 dans le cas d'un véhicule à traction comprenant un essieu avant 4.

Le système de transmission 1 a pour but d'entrainer la pompe du module hydraulique 3 afin que cette dernière puisse alimenter un circuit hydraulique sous pression permettant de motoriser un deuxième essieu non représenté.

Le système de transmission 1 comprend un dispositif de couplage 5 monté entre un arbre moteur 6 entrainé par le groupe motopropulseur 2 et un arbre 7 du module hydraulique 3.

Le dispositif de couplage 5 comprend un embrayage 8, une boite à vitesses 9 et un différentiel 10. La boite à vitesses 9 comprend un arbre principal 11 et un arbre secondaire 12. Les arbres 11 et 12 peuvent être couplés en rotation, avec différents rapports de réduction, par engrènement des pignons 13a solidaires de l'arbre 11 et des pignons 13b solidaires de l'arbre 12. L'arbre principale 11 peut être couplé à l'arbre moteur 6 au moyen de l'embrayage 8 placé entre lesdits arbres 6 et 11.

L'arbre secondaire 12 porte un pignon de descente 14 apte à engrener le différentiel 10. Le différentiel 10 comprend à cet effet une couronne 15 solidaire d'une cage 16 du différentiel 10 et engrenant le pignon de descente 14.

Le différentiel 10 est placé entre deux demi-arbres 17 et 18 formant l'essieu 4. Le différentiel 10 a pour fonction de lier cinématiquement l'arbre secondaire 12 aux deux demi-arbres 17 et 18 en autorisant une vitesse de rotation différente entre le demi-arbre 16 et le demi-arbre 17.

L'arbre 7 du module hydraulique 3 est lié cinématiquement à la cage 16 du différentiel 10.

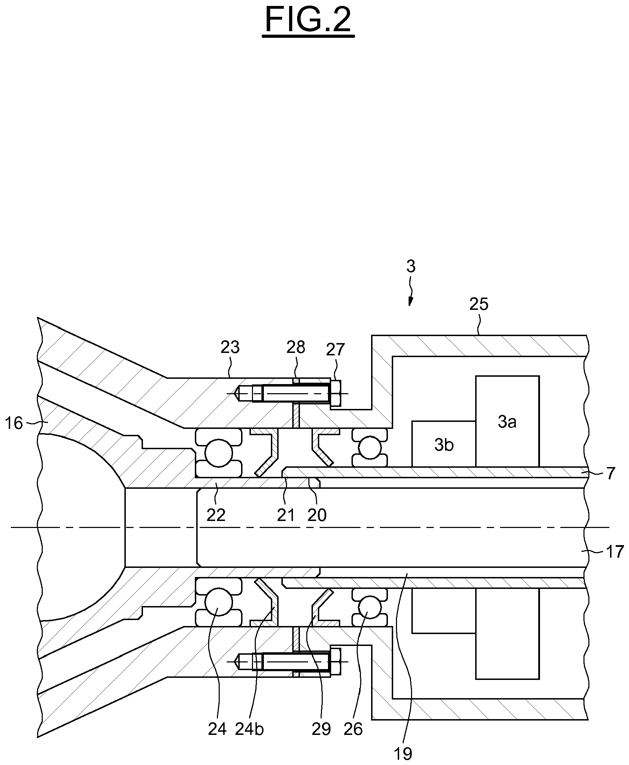

La figure 2 représente une vue de détail de la liaison entre l'arbre 7 et la cage 16 du différentiel 10.

L'arbre 7 est creux permettant le passage du demi-arbre 17. Un espace 19 sépare l'arbre 7 et le demi-arbre 17, ce qui autorise un mouvement relatif entre les deux arbres 7 et 17.

L'arbre 7 comprend des cannelures 20 sur sa surface intérieure. Les cannelures 20 sont compatibles avec des cannelures 21 disposés sur la surface extérieure d'une portion cylindrique 22 de la cage 16 du différentiel 10. L'arbre 7 s'étend donc autour de la portion cylindrique 22, les cannelures 21 et 20 s'engrenant.

La cage 16 du différentiel 10 est monté rotatif dans un carter 23 du dispositif de couplage 5 au moyen des paliers 24. Un joint à lèvre 24b placé entre le carter 23 et la portion cylindrique 22 garantit l'étanchéité du différentiel 10.

L'arbre 7, l'embrayage 3b et la pompe 3a du module hydraulique 3 sont contenus dans un carter 25. L'arbre creux 7 est monté rotatif dans le carter 25 au moyen d'un palier 26.

Le carter 25 et le carter 23 sont fixés au moyen d'éléments de fixation 27. La fixation est rendue étanche par la présence d'un joint plat 28 placé entre les carter 25 et 23 et d'un joint à lèvre 29 placé entre l'arbre 7 et le carter 25.

Comme représenté sur la figure 1, le dispositif de couplage comprend également un deuxième carter 30 contenant la boîte de vitesses 9.

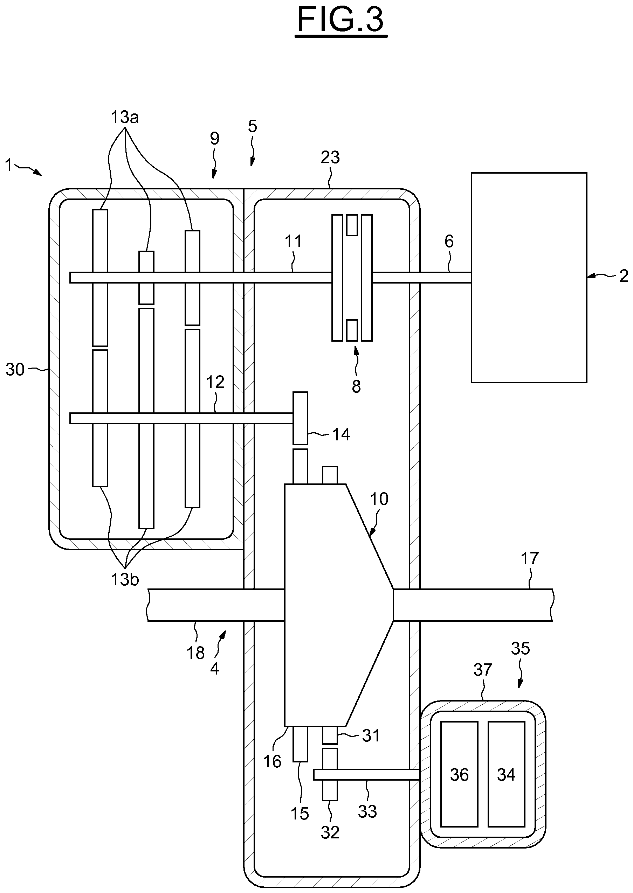

La figure 3 représente un deuxième mode de réalisation de l'invention. Les éléments communs aux figures 1 et 3 portent les mêmes références. Dans ce mode de réalisation, une couronne supplémentaire 31 est montée fixe sur la cage 16 du différentiel. Un pignon 32 porté par un arbre 33 engrène la couronne supplémentaire 31. L'arbre 33 est lié cinématiquement à une pompe 34 d'un module hydraulique 35. Le module hydraulique 35 comprend également un embrayage 34 apte à coupler ou non la pompe 34 à l'arbre 33. Le module hydraulique 35 comprend un carter 37. Le carter 37 est fixé mécaniquement sur le carter 23 du dispositif de couplage 5. Des garnitures étanches, non représentées, assurent l'étanchéité de l'assemblage.

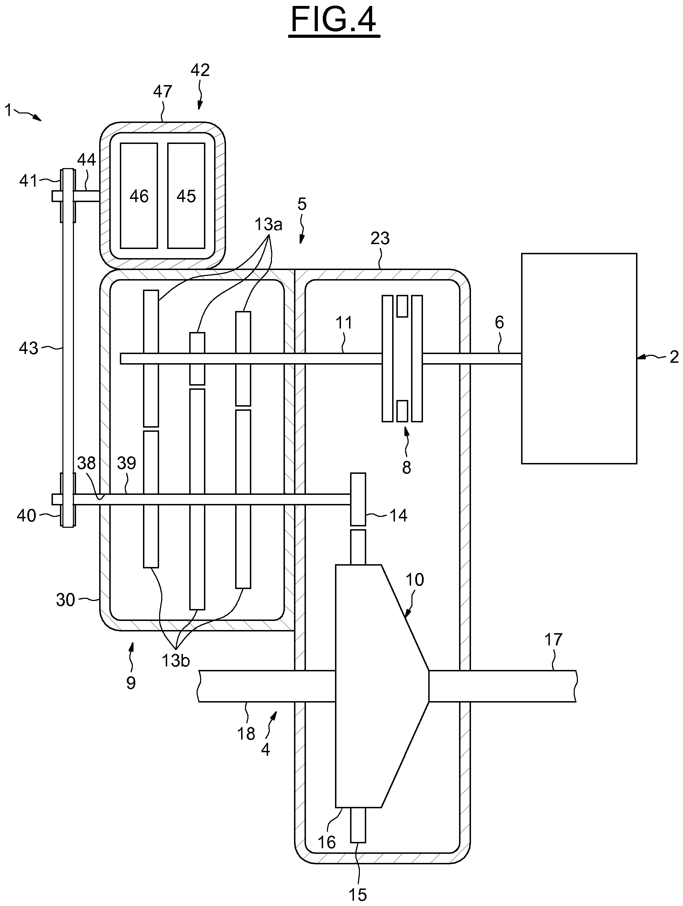

La figure 4 représente un troisième mode de réalisation. Les éléments communs aux figures 1, 3 et 4 portent les mêmes références.

Dans ce mode de réalisation, le carter 30 est pourvu d'un passage 38 permettant le passage d'un arbre secondaire 39 de la boîte de vitesse 9. L'arbre 39 est plus long que l'arbre 12 des figures 1 et 3. Il porte une poulie 40 située à l'extérieur du carter 30. La poulie 40 est liée cinématiquement à une poulie 41 d'un module hydraulique 42. La liaison est effectuée au moyen d'une courroie 43. La poulie 41 du module hydraulique 42 est montée sur un arbre 44 solidaire d'une pompe 45. Un embrayage 46 permet de coupler ou non la pompe 45 avec l'arbre 44. Le module hydraulique 42 comprend également un carter 47 fixé sur le carter 30 de la boite de vitesses 9.

## Revendications

1. Système de transmission de couple (1) d'un groupe motopropulseur de véhicule automobile, le véhicule étant muni d'au moins deux essieux motorisés, le système de transmission de couple comprenant un dispositif de couplage (5) entre un arbre moteur (6) entrainé par le groupe motopropulseur et un essieu motorisé (4) comprenant deux demi-arbres portant des roues, le système de transmission de couple comprenant par ailleurs un module hydraulique (3, 35, 42) comprenant une pompe pour alimenter un circuit hydraulique sous pression permettant de motoriser un deuxième essieu et un arbre apte à entraîner ladite pompe, ledit dispositif de couplage (5) comprenant au moins une boite de vitesses (9) et un différentiel (10), le différentiel (10) disposé dans un carter (23) est placé entre les deux demi-arbres de l'essieu, **caractérisé en ce que** le module hydraulique est fixé sur le dispositif de couplage, à l'extérieur dudit dispositif, l'arbre du module hydraulique étant entrainé par le dispositif de couplage, ledit différentiel comprenant une cage (16) munie d'une couronne (15), la boîte de vitesses (9) disposée dans un autre carter (30) comprend au moins deux arbres (11, 39), un arbre primaire entrainé par l'arbre moteur et un arbre secondaire lié cinématiquement à l'arbre primaire, l'arbre secondaire (12) de la boite de vitesse portant un pignon de descente (14) apte à engrener la couronne (15) du différentiel (10), le module hydraulique comprenant au moins un carter (23, 30, 25, 37, 47) assemblé sur le carter comprenant le différentiel ou le carter comprenant la boite de vitesses.

2. Système de transmission selon la revendication 1, dans lequel l'arbre (7) du module hydraulique est pourvu de cannelures et la cage du différentiel est pourvue de cannelures aptes à recevoir les cannelures de l'arbre (7) du module hydraulique.

3. Système de transmission selon la revendication 2, dans lequel l'arbre du module hydraulique est creux et configuré pour le passage d'un des demi-arbres de l'essieu.

4. Système de transmission selon la revendication 1, dans lequel une couronne supplémentaire (31) solidaire de la cage, et dans lequel l'arbre (33) du module hydraulique (35) porte un pignon (32), la couronne supplémentaire (31) solidaire de la cage engrainant le pignon (32) porté par l'arbre du module hydraulique.

5. Système de transmission selon la revendication 1, dans lequel l'un des deux arbres de ladite boite de vitesses porte une première poulie (40) et l'arbre (44) du module hydraulique (42) porte une deuxième poulie (41), liée cinématiquement avec la première poulie au moyen d'une courroie.

6. Système de transmission selon la revendication 1, dans lequel l'un des deux arbres de ladite boite de vitesses porte un premier pignon et l'arbre du module hydraulique porte un deuxième pignon, lié cinématiquement avec le premier pignon au moyen d'une chaine.

7. Système de transmission selon la revendication 1, dans lequel l'un des deux arbres de ladite boite de vitesses porte un premier pignon et l'arbre du module hydraulique porte un deuxième pignon, lié cinématiquement avec le premier pignon au moyen d'au moins un autre pignon intermédiaire.

8. Système de transmission selon la revendication 7, comprenant des garnitures étanches (29) placées entre le carter du module hydraulique et le carter du dispositif de couplage.

9. Système de transmission selon l'une quelconque des revendications 1 à 8 dans lequel le module hydraulique comprend un dispositif d'embrayage (3b, 36, 46) placé entre l'arbre dudit module et la pompe dudit module apte à coupler ou désaccoupler l'arbre et la pompe.

## Patentansprüche

1. Drehmomentübertragungssystem (1) eines Antriebsstrangs eines Kraftfahrzeugs, wobei das Fahrzeug mit mindestens zwei motorisierten Achsen versehen ist, wobei das Drehmomentübertragungssystem eine Kopplungsvorrichtung (5) zwischen einer vom Antriebsstrang angetriebenen Antriebswelle (6) und einer motorisierten Achse (4) enthält, die zwei Räder tragende Halbwellen enthält, wobei das Drehmomentübertragungssystem außerdem ein Hydraulikmodul (3, 35, 42) enthält, das eine Pumpe zur Versorgung eines unter Druck stehenden Hydraulikkreises, der es ermöglicht, eine zweite Achse zu motorisieren, und eine Welle enthält, die die Pumpe antreiben kann, wobei die Kopplungsvorrichtung (5) mindestens ein Getriebe (9) und ein Differential (10) enthält, wobei das in einem Gehäuse (23) angeordnete Differential (10) zwischen den zwei Halbwellen der Achse platziert ist, **dadurch gekennzeichnet, dass** das Hydraulikmodul an der Kopplungsvorrichtung außerhalb der Vorrichtung befestigt ist, wobei die Welle des Hydraulikmoduls von der Kopplungsvorrichtung angetrieben wird, wobei das Differential einen mit einem Kranz (15) versehenen Käfig (16) enthält, wobei das in einem anderen Gehäuse (30) angeordnete Getriebe (9) mindestens zwei Wellen (11, 39) enthält, eine von der Antriebswelle angetriebene Primärwelle und eine Sekundärwelle, die kinematisch mit der Primärwelle verbunden ist, wobei die Sekundärwelle (12) des Getriebes ein Abwärts-Zahnrad (14) trägt, das in den Kranz (15) des Differentials (10) eingreifen kann, wobei das Hydraulikmodul mindestens ein Gehäuse (23, 30, 25, 37, 47) enthält, das auf das das Differential enthaltende Gehäuse oder das das Getriebe enthaltende Gehäuse montiert ist.

2. Übertragungssystem nach Anspruch 1, wobei die Welle (7) des Hydraulikmoduls mit Keilnuten ausgestattet ist, und der Käfig des Differentials mit Keilnuten ausgestattet ist, die die Keilnuten der Welle (7) des Hydraulikmoduls aufnehmen können.

3. Übertragungssystem nach Anspruch 2, wobei die Welle des Hydraulikmoduls hohl und für den Durchgang einer der Halbwellen der Achse konfiguriert ist.

4. Übertragungssystem nach Anspruch 1, wobei ein zusätzlicher Kranz (31) fest mit dem Käfig verbunden ist, und wobei die Welle (33) des Hydraulikmoduls (35) ein Zahnrad (32) trägt, wobei der fest mit dem Käfig verbundene zusätzliche Kranz (31) in das von der Welle des Hydraulikmoduls getragene Zahnrad (32) eingreift.

5. Übertragungssystem nach Anspruch 1, wobei eine der zwei Wellen des Getriebes eine erste Riemenscheibe (40) und die Welle (44) des Hydraulikmoduls (42) eine zweite Riemenscheibe (41) trägt, die mittels eines Antriebsriemens kinematisch mit der ersten Riemenscheibe verbunden ist.

6. Übertragungssystem nach Anspruch 1, wobei eine der zwei Wellen des Getriebes ein erstes Zahnrad trägt und die Welle des Hydraulikmoduls ein zweites Zahnrad trägt, das mittels einer Kette kinematisch mit dem ersten Zahnrad verbunden ist.

7. Übertragungssystem nach Anspruch 1, wobei eine der zwei Wellen des Getriebes ein erstes Zahnrad trägt und die Welle des Hydraulikmoduls ein zweites Zahnrad trägt, das mittels mindestens eines anderen Zwischenzahnrads kinematisch mit dem ersten Zahnrad verbunden ist.

8. Übertragungssystem nach Anspruch 7, das Dichtungen (29) enthält, die zwischen dem Gehäuse des Hydraulikmoduls und dem Gehäuse der Kopplungsvorrichtung platziert sind.

9. Übertragungssystem nach einem der Ansprüche 1 bis 8, wobei das Hydraulikmodul eine zwischen der Welle des Moduls und der Pumpe des Moduls platzierte Kupplungsvorrichtung (3b, 36, 46) enthält, die die Welle und die Pumpe koppeln oder entkoppeln kann.

## Claims

1. Torque transmission system (1) of a motor vehicle power train, the vehicle being provided with at least two motor-driven axles,
the torque transmission system comprising a coupling device (5) between a drive shaft (6) driven by the power train and a motor-driven axle (4) comprising two half-shafts bearing wheels,
the torque transmission system also comprising a hydraulic module (3, 35, 42) comprising a pump for supplying a hydraulic circuit under pressure making it possible to motorize a second axle and a shaft that can drive said pump, said coupling device (5) comprising at least one gearbox (9) and a differential (10), the differential (10) disposed in a casing (23) is placed between the two half-shafts of the axle, **characterized in that** the hydraulic module is fixed onto the coupling device, outside of said device, the shaft of the hydraulic module being driven by the coupling device, said differential comprising a cage (16) provided with a crown ring (15), the gearbox (9) disposed in another casing (30) comprises at least two shafts (11, 39), a primary shaft driven by the drive shaft and a secondary shaft linked kinematically to the primary shaft, the secondary shaft (12) of the gearbox bearing an intermediate pinion (14) capable of meshing with the crown ring (15) of the differential (10),
the hydraulic module comprising at least one casing (23, 30, 25, 37, 47) assembled on the casing comprising the differential or the casing comprising the gearbox.

2. Transmission system according to Claim 1, wherein the shaft (7) of the hydraulic module is provided with splines and the cage of the differential is provided with splines capable of receiving the splines of the shaft (7) of the hydraulic module.

3. Transmission system according to Claim 2, wherein the shaft of the hydraulic module is hollow and configured for the passage of one of the half-shafts of the axle.

4. Transmission system according to Claim 1, wherein an additional crown ring (31) is secured to the cage, and wherein the shaft (33) of the hydraulic module (35) has a pinion (32), the additional crown ring (31) secured to the cage meshing with the pinion (32) borne by the shaft of the hydraulic module.

5. Transmission system according to Claim 1, wherein one of the two shafts of said gearbox bears a first pulley (40) and the shaft (44) of the hydraulic module (42) bears a second pulley (41), linked kinematically with the first pulley by means of the belt.

6. Transmission system according to Claim 1, wherein one of the two shafts of said gearbox bears a first pinion and the shaft of the hydraulic module bears a second pinion, linked kinematically with the first pinion by means of a chain.

7. Transmission system according to Claim 1, wherein one of the two shafts of said gearbox bears a first pinion and the shaft of the hydraulic module bears a second pinion, linked kinematically with the first pinion by means of at least one other intermediate pinion.

8. Transmission system according to Claim 7, comprising seal-tight linings (29) placed between the casing of the hydraulic module and the casing of the coupling device.

9. Transmission system according to any one of Claims 1 to 8, wherein the hydraulic module comprises a clutch device (3b, 36, 46) placed between the shaft of said module and the pump of said module capable of coupling or uncoupling the shaft and the pump.
